# EUROPEAN PATENT APPLICATION

(11) **EP 4 761 069 A1**
(43) Date of publication of application: **17.06.2026**
(21) Application number: 25179661.1
(22) Date of filing: 29.05.2025
(51) Int. Cl.: H02K 1/276, H02K 15/03, H02K 15/035

(54) **SILICON STEEL SHEET STACKING STRUCTURE AND MOTOR ROTOR STRUCTURE**

(30) Priority: 16.12.2024 CN 202411848431
(71) Applicant: Delta Electronics, Inc., Taoyuan City 333 (TW)
(72) Inventor: KUO, Chao-Chieh, Taoyuan City 333 (TW); CHEN, Chuan-Ying, Taoyuan City 333 (TW); CHIU, Chih-Wei, Taoyuan City 333 (TW); LIN, Hsing-Cheng, Taoyuan City 333 (TW)
(74) Representative: Riccardi, Elisa

(57) **Abstract**

A silicon steel sheet stacking structure includes a main silicon steel lamination, a blocking silicon steel sheet, and a riveting blocking portion. The main silicon steel lamination includes silicon steel sheets stacking in a first direction. Each of the silicon steel sheets has at least one through hole. The blocking silicon steel sheet is disposed on the main silicon steel lamination. The blocking silicon steel sheet has at least one through hole. The riveting blocking portion is extended from the blocking silicon steel sheet and is raised above a surface of the blocking silicon steel sheet. The riveting blocking portion is configured to be compressed and generate a deformation, such that the riveting blocking portion pushes at least one magnet located in the at least one accommodating space to abut the at least one magnet against an inner surface of the at least one through hole.

## Description

### BACKGROUND

### Field of Invention

The present invention relates to a silicon steel sheet stacking structure and a motor rotor structure.

### Description of Related Art

Conventional permanent magnet motor rotors require magnets to be installed in magnet slots and secured with magnet adhesive. The adhesive is then cured to fix the magnets in place. However, before applying the adhesive, the inserted magnets often fail to stay in their designated positions, and the adhesion tends to be uneven. During motor operation, the magnets may shift due to centrifugal force or even collide, leading to fractures. Additionally, the motor's noise, vibration, and harshness (NVH) performance may be adversely affected during the motor operation.

### SUMMARY

In view of this, one purpose of the present disclosure is to provide a silicon steel sheet stacking structure and a motor rotor structure that can solve the aforementioned problems.

In order to achieve the above objective, according to an embodiment of the present disclosure, a silicon steel sheet stacking structure includes a main silicon steel lamination, a blocking silicon steel, and a riveting blocking portion. The main silicon steel lamination includes a plurality of silicon steel sheets stacking in a first direction. Each of the silicon steel sheets has at least one through hole. The blocking silicon steel sheet is disposed on the main silicon steel lamination. The blocking silicon steel sheet has at least one through hole. A plurality of the through holes of the main silicon steel lamination are aligned with the at least one through hole of the blocking silicon steel sheet in the first direction and define at least one accommodating space. The riveting blocking portion is extended from the blocking silicon steel sheet and raised above a surface of the blocking silicon steel sheet along the first direction. The riveting blocking portion is configured to be compressed and generate a deformation, such that the riveting blocking portion pushes at least one magnet located in the at least one accommodating space to abut the at least one magnet against an inner surface of the at least one through hole.

In order to achieve the above objective, according to an embodiment of the present disclosure, a motor rotor structure includes the silicon steel sheet stacking structure as defined in claim 1 and at least one magnet. The at least one magnet is located in the at least one accommodating space and abuts against an inner surface of the at least one through hole. The at least one magnet passes through the main silicon steel lamination and the blocking silicon steel sheet.

In summary, in the silicon steel sheet stacking structure and the motor rotor structure of the present disclosure, since the riveting blocking portion is extended from the blocking silicon steel sheet and raised above the surface of the blocking silicon steel sheet, when the riveting blocking portion is compressed under pressure and generates a deformation, the riveting blocking portion can straighten and enter the through hole, thereby fixing the magnet located in the through hole. In the silicon steel sheet stacking structure and the motor rotor structure of the present disclosure, since the riveting blocking portion can enter the through hole and fix the magnet after being compressed, it solves the problem of the center of gravity of the magnet being unbalanced in the through hole, and prevents the magnet from falling off or cracking during subsequent motor operation, while also optimizing vibration and noise performance. Overall, the silicon steel sheet stacking structure and the motor rotor structure of the present disclosure optimize the method of fixing the magnet, ensuring that the magnet can still be securely fastened within the through hole.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 is a perspective view of a silicon steel sheet stacking structure in accordance with an embodiment of the present disclosure;
Fig. 2A is a schematic cross-sectional view of the silicon steel sheet stacking structure in accordance with an embodiment of the present disclosure;
Fig. 2B and Fig. 2C are partial top views of a riveting blocking portion of a motor rotor structure being compressed before and after, respectively, in accordance with an embodiment of the present disclosure;
Fig. 3A is a perspective view of a silicon steel sheet stacking structure in accordance with an embodiment of the present disclosure;
Fig. 3B and Fig. 3C are partial top views of the riveting blocking portion of the motor rotor structure being compressed before and after, respectively, in accordance with an embodiment of the present disclosure;
Fig. 4A is a perspective view of a blocking silicon steel sheet in accordance with an embodiment of the present disclosure;
Fig. 4B and Fig. 4C are partial top views of the riveting blocking portion of the motor rotor structure being compressed before and after, respectively, in accordance with an embodiment of the present disclosure;
Fig. 5A is a perspective view of a blocking silicon steel sheet in accordance with an embodiment of the present disclosure;
Fig. 5B and Fig. 5C are partial top views of the riveting blocking portion of the motor rotor structure being compressed before and after, respectively, in accordance with an embodiment of the present disclosure;
Fig. 6A is a schematic cross-sectional view of a silicon steel sheet stacking structure in accordance with an embodiment of the present disclosure;
Fig. 6B is a schematic cross-sectional view of a silicon steel sheet stacking structure in accordance with an embodiment of the present disclosure; and
Fig. 6C is a schematic cross-sectional view of a silicon steel sheet stacking structure in accordance with an embodiment of the present disclosure.

### DETAILED DESCRIPTION

Hereinafter, a plurality of embodiments of the present disclosure will be disclosed in diagrams. For the sake of clarity, many details in practice will be described in the following description. However, it should be understood that these details in practice should not limit present disclosure. In other words, in some embodiments of present disclosure, these details in practice are unnecessary. In addition, for simplicity of the drawings, some conventionally used structures and elements will be shown in a simple schematic manner in the drawings. The same reference numbers are used in the drawings and the description to refer to the same or like parts.

Hereinafter, the structure and function of each component included in a silicon steel sheet stacking structure 100 of this embodiment and the connection relationship between the components will be described in detail.

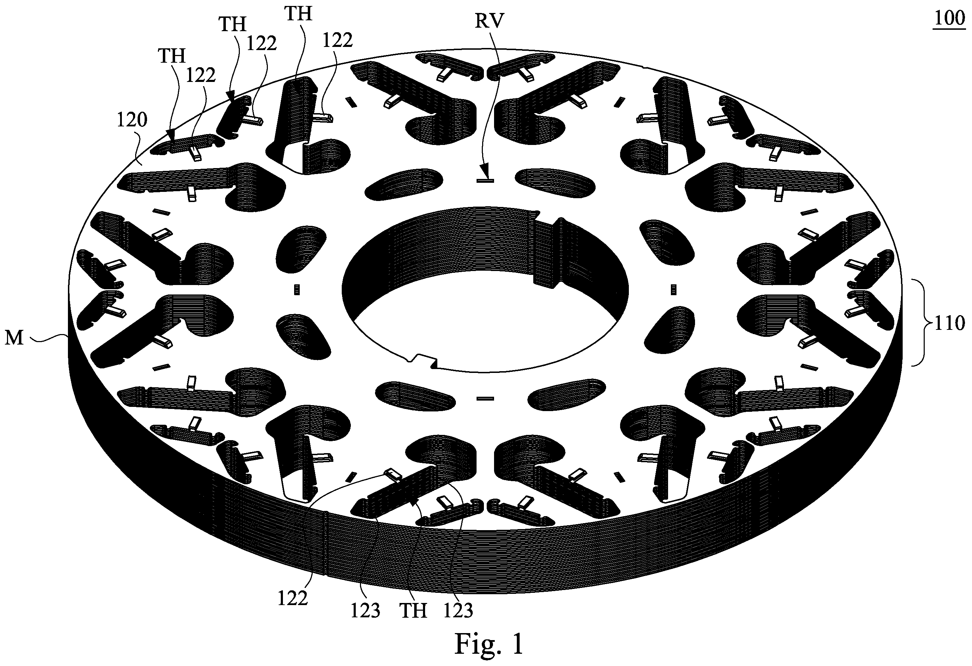

Reference is made to Fig. 1. In this embodiment, the silicon steel sheet stacking structure 100 includes a main silicon steel lamination 110, a blocking silicon steel sheet 120, and a riveting blocking portion 122. The main silicon steel lamination 110 has a through hole TH. Specifically, the main silicon steel lamination 110 includes one or more silicon steel sheets M. In some embodiments in which the main silicon steel lamination 110 includes the plurality of silicon steel sheets M, the main silicon steel lamination 110 is formed by stacking the silicon steel sheets M. Each of the one or more silicon steel sheets M has a through hole TH. The blocking silicon steel sheet 120 is disposed on the main silicon steel lamination 110. The blocking silicon steel sheet 120 also has a through hole TH. In some embodiments, the through holes TH of the one or more silicon steel sheets M are aligned with the through hole TH of the blocking silicon steel sheet 120 in a direction and define an accommodating space. For example, the one or more through holes TH of the one or more silicon steel sheets M are aligned with the through hole TH of the blocking silicon steel sheet 120 in a vertical direction to define the accommodating space to accommodate a magnet MG. The riveting blocking portion 122 is extended from the blocking silicon steel sheet 120 and is adjacent to the through hole TH. Specifically, the riveting blocking portion 122 is raised above a surface of the blocking silicon steel sheet 120 in the vertical direction. An end of the riveting blocking portion 122, away from the through hole TH, is connected to the blocking silicon steel sheet 120, while the other end of the riveting blocking portion 122, closer to the through hole TH, is suspended relative to the blocking silicon steel sheet 120.

Reference is made again to Fig. 1. In this embodiment, the silicon steel sheet stacking structure 100 further includes a limiting portion 123. The limiting portion 123 is extended from the main silicon steel lamination 110 and the blocking silicon steel sheet 120 into the through hole TH. Specifically, each of the one or more silicon steel sheets M includes a limiting portion 123, and the blocking silicon steel sheet 120 also includes a limiting portion 123. In some embodiments, one or more limiting portions 123 of the one or more silicon steel sheets M are aligned with the limiting portion 123 of the blocking silicon steel sheet 120 in a direction. For example, one or more limiting portions 123 of the one or more silicon steel sheets M are aligned with the limiting portion 123 of the blocking silicon steel sheet 120 in a vertical direction. The limiting portion 123 is configured to limit two ends of the magnet MG, thus restricting the movement range of the magnet MG within the through hole TH to a certain extent.

Reference is made again to Fig. 1. In this embodiment, the silicon steel sheet stacking structure 100 further has a rivet hole RV. The rivet hole RV is separated from the through hole TH. Specifically, each of the one or more silicon steel sheets M in the main silicon steel lamination 110 includes a rivet hole RV, and the blocking silicon steel sheet 120 also includes a rivet hole RV. In some embodiments, the rivet holes RV of the main silicon steel lamination 110 are aligned with the rivet hole RV of the blocking silicon steel sheet 120 in a direction. For example, one or more rivet holes RV of the main silicon steel lamination 110 are aligned with the rivet hole RV of the blocking silicon steel sheet 120 in a vertical direction. In a usage scenario, a manufacturer can insert additional riveting parts (e.g., rivets) through the one or more rivet holes RV of the main silicon steel lamination 110 and the rivet hole RV of the blocking silicon steel sheet 120 in the vertical direction, and then permanently joins the main silicon steel lamination 110 and the blocking silicon steel sheet 120 by using a riveting process.

In some embodiments, the riveting blocking portion 122 can be formed by, for example, a stamping process. For example, the stamping process can be used to punch the blocking silicon steel sheet 120 to form the riveting blocking portion 122. However, the present disclosure is not intended to limit the method of forming the riveting blocking portion 122.

In some embodiments, the quantity of the riveting blocking portions 122, the limiting portions 123, the through holes TH, and the rivet holes RV can each be plural. However, the present disclosure is not intended to limit the quantity of the riveting blocking portions 122, the limiting portions 123, the through holes TH, and the rivet holes RV.

The following describes how the magnet MG is fixed in the silicon steel sheet stacking structure 100 according to one or more embodiments of the present disclosure.

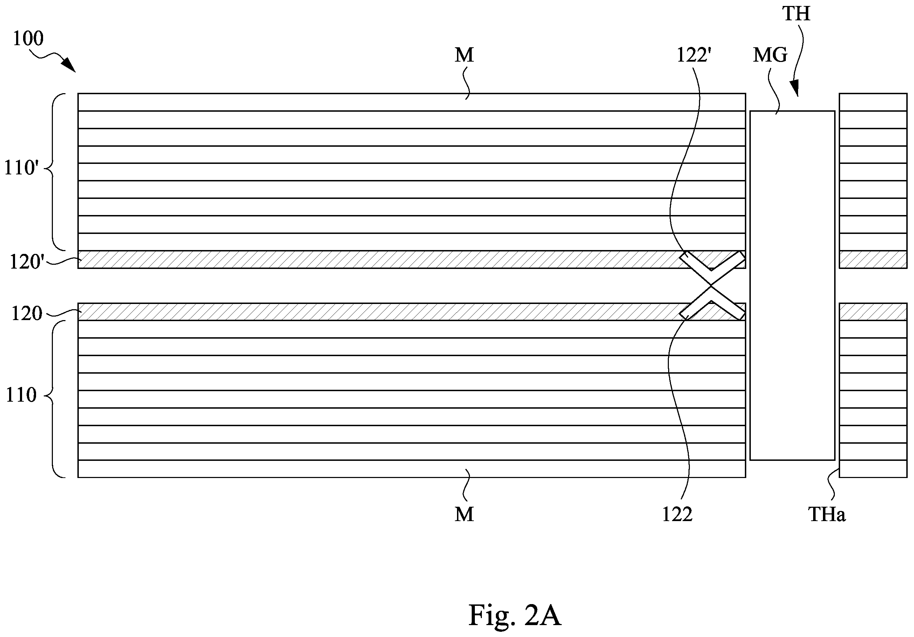

Reference is made to Fig. 2A. In this embodiment, the one or more through holes TH of the one or more silicon steel sheets M are aligned with the through hole TH of the blocking silicon steel sheet 120 in a vertical direction and define an accommodating space to accommodate the magnet MG, thus forming the through holes TH that extend and elongate in the vertical direction through both the main silicon steel lamination 110 and the blocking silicon steel sheet 120. The through holes TH that pass through both the main silicon steel lamination 110 and the blocking silicon steel sheet 120 have an inner surface THa. In a usage scenario, a manufacturer can first stack silicon steel sheets M to form the main silicon steel lamination 110 and then stack the blocking silicon steel sheet 120 on the main silicon steel lamination 110, so that the one or more through holes TH of the silicon steel sheets M are aligned with the through hole TH of the blocking silicon steel sheet 120 and define the accommodating space to accommodate the magnet MG.

According to one embodiment of the present disclosure, the silicon steel sheet stacking structure 100 further includes a main silicon steel lamination 110', a blocking silicon steel sheet 120', and a riveting blocking portion 122'. Since the structural configuration of the main silicon steel lamination 110', the blocking silicon steel sheet 120', and the riveting blocking portion 122' is identical to that of the main silicon steel lamination 110, the blocking silicon steel sheet 120, and the riveting blocking portion 122, further description of these components is omitted here. The blocking silicon steel sheet 120' is located over the blocking silicon steel sheet 120, with the blocking silicon steel sheet 120' being upside down relative to the blocking silicon steel sheet 120. The main silicon steel lamination 110' is located on the blocking silicon steel sheet 120'. In this embodiment, the through hole TH passing through both the main silicon steel lamination 110' and the blocking silicon steel sheet 120' is aligned with the through hole TH passing through both the main silicon steel lamination 110 and the blocking silicon steel sheet 120 and define an accommodating space to accommodate the magnet MG, thus forming a through hole TH that passes through the main silicon steel lamination 110, the blocking silicon steel sheet 120, the blocking silicon steel sheet 120', and the main silicon steel lamination 110' and elongates in a vertical direction. In some embodiments, since the riveting blocking portion 122' is also raised above the blocking silicon steel sheet 120' in the vertical direction, the blocking silicon steel sheet 120 is separated from the blocking silicon steel sheet 120' by a distance. In a usage scenario, the manufacturer then stacks the blocking silicon steel sheet 120' on the blocking silicon steel sheet 120. In this case, the riveting blocking portion 122 and the riveting blocking portion 122' face to each other. Next, the manufacturer stacks the main silicon steel lamination 110' on the blocking silicon steel sheet 120', thereby forming the silicon steel sheet stacking structure 100.

Next, the magnet MG is located in the silicon steel sheet stacking structure 100. Specifically, the magnet MG is located in the through hole TH. In this case, the magnet MG is located in the through hole TH and is limited by the limiting portion 123. In some embodiments, the magnet MG is located between two limiting portions 123. In a usage scenario, the manufacturer places an end of the magnet MG between the two limiting portions 123 and inserts the magnet MG into the through hole TH, so that the entire magnet MG is fully accommodated in the through hole TH (i.e., the magnet MG does not protrude from the through hole TH).

Next, the silicon steel sheet stacking structure 100 is compressed, and the magnet MG is fixed in the through hole TH. Specifically, the silicon steel sheet stacking structure 100 bears a pressure P from both ends (e.g., the pressure P from above and the pressure P from below), such that the riveting blocking portion 122 and the riveting blocking portion 122' generate deformations. More specifically, the riveting blocking portion 122, which is originally raised relative to the blocking silicon steel sheet 120, and the riveting blocking portion 122', which is originally raised relative to the blocking silicon steel sheet 120', are compressed by the pressure P and flattened. The flattened riveting blocking portion 122 and the flattened riveting blocking portion 122' then straighten in a horizontal direction and enter the through hole TH, pushing the magnet MG that is located in the through hole TH. Eventually, the magnet MG is pushed by the deformed riveting blocking portion 122 and the deformed riveting blocking portion 122' and abuts against the inner surface THa of the through hole TH.

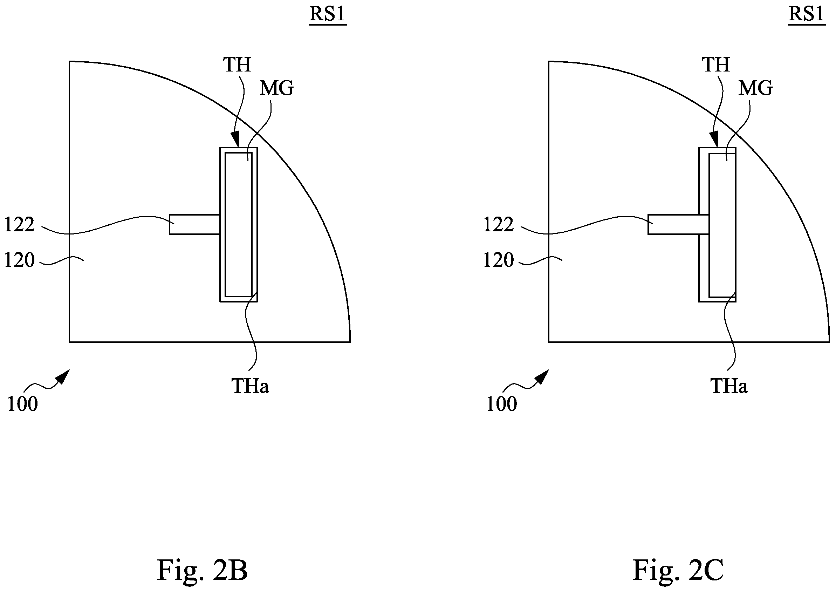

Reference is made to Fig. 2B, which depicts the state before the riveting blocking portion 122 is compressed. The silicon steel sheet stacking structure 100 and the magnet MG form the motor rotor structure RS1. For simplicity, the limiting portion 123 is omitted in Fig. 2B. In this embodiment, when the riveting blocking portion 122 is not compressed, it does not enter the range of the through hole TH, nor does it contact the magnet MG. In some embodiments, when the riveting blocking portion 122 is not compressed, the riveting blocking portion 122 does not contact the magnet MG.

Reference is made to Fig. 2C, which depicts the state after the riveting blocking portion 122 is compressed. In this embodiment, when the riveting blocking portion 122 is compressed, it deforms and enters the range of the through hole TH, and the riveting blocking portion 122 abuts against the magnet MG. Specifically, the magnet MG is pushed by the deformed riveting blocking portion 122 and abuts against the inner surface THa of the through hole TH. In some embodiments, when the riveting blocking portion 122 is compressed, the riveting blocking portion 122 contacts the magnet MG, such that the magnet MG abuts against the inner surface THa of the through hole TH on a side away from the riveting blocking portion 122.

By the aforementioned structural configuration, the silicon steel sheet stacking structure 100 and the motor rotor structure RS1 have many advantages. One of the advantages is that when the riveting blocking portion 122 is compressed, the riveting blocking portion 122 can directly abut against the magnet MG, achieving an excellent effect in fixing the magnet MG.

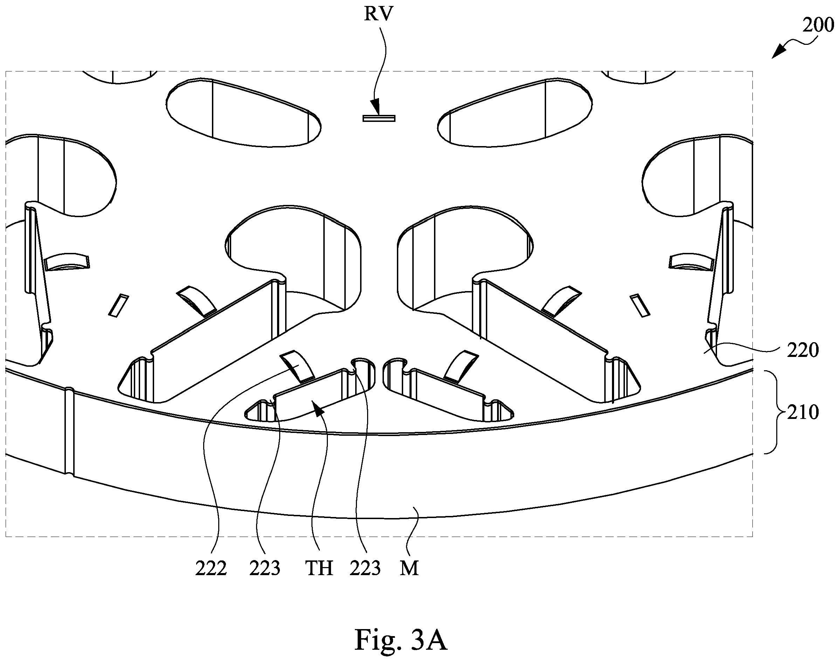

Reference is made to Fig. 3A. In this embodiment, the silicon steel sheet stacking structure 200 includes the main silicon steel lamination 210, the blocking silicon steel sheet 220, and the riveting blocking portion 222. The main silicon steel lamination 210 has a through hole TH. Specifically, the main silicon steel lamination 210 includes one or more silicon steel sheets M. In some embodiments in which the main silicon steel lamination 210 includes a plurality of silicon steel sheets M, the main silicon steel lamination 210 is formed by stacking the silicon steel sheets M. Each of the one or more silicon steel sheets M has a through hole TH. The blocking silicon steel sheet 220 is disposed on the main silicon steel lamination 210. The blocking silicon steel sheet 220 has a through hole TH. In some embodiments, one or more through holes TH of the one or more silicon steel sheets M are aligned with the through hole TH of the blocking silicon steel sheet 220 in a direction and define an accommodating space. For example, one or more through holes TH of the one or more silicon steel sheets M are aligned with the through hole TH of the blocking silicon steel sheet 220 in a vertical direction and define the accommodating space to accommodate the magnet MG. The riveting blocking portion 222 is extended from the blocking silicon steel sheet 220 and is adjacent to the through hole TH. Specifically, the riveting blocking portion 222 is raised above a surface of the blocking silicon steel sheet 220 in the vertical direction. In this embodiment, both ends of the riveting blocking portion 222 are connected to the blocking silicon steel sheet 220, with the middle section of the riveting blocking portion 222 suspended.

Reference is made again to Fig. 3A. In this embodiment, the silicon steel sheet stacking structure 200 further includes a limiting portion 223. Since the structure of the limiting portion 223 is similar to that of the limiting portion 123, further description is omitted here. In this embodiment, the silicon steel sheet stacking structure 200 further has a rivet hole RV. Since the structure of the rivet hole RV of the silicon steel sheet stacking structure 200 is similar to that of the rivet hole RV of the silicon steel sheet stacking structure 100, further description is omitted here.

In some embodiments, the riveting blocking portion 222 can be formed by, for example, a stamping process. For example, the stamping process can be used to punch the blocking silicon steel sheet 220 to form the riveting blocking portion 222. However, the present disclosure is not intended to limit the method of forming the riveting blocking portion 222.

In some embodiments, the quantity of the riveting blocking portions 222, the limiting portions 223, the through holes TH, and the rivet holes RV can each be plural. However, the present disclosure is not intended to limit the quantity of the riveting blocking portions 222, the limiting portions 223, the through holes TH, and the rivet holes RV.

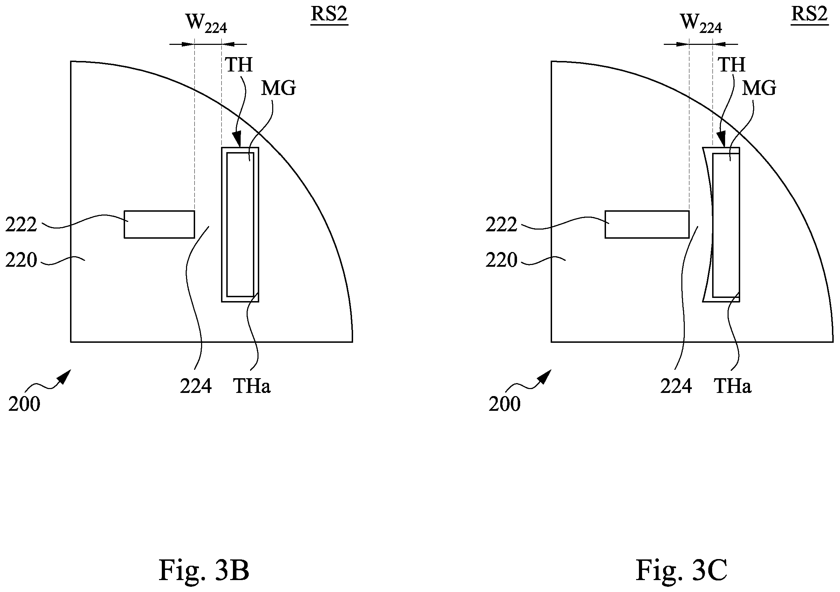

Reference is made to Fig. 3B, which depicts the state before the riveting blocking portion 222 is compressed. The silicon steel sheet stacking structure 200 and the magnet MG form the motor rotor structure RS2. For simplicity, the limiting portion 223 is omitted in Fig. 3B. In this embodiment, the blocking silicon steel sheet 220 further includes a deformation portion 224. Specifically, the deformation portion 224 is a portion of the blocking silicon steel sheet 220. The deformation portion 224 is located between the riveting blocking portion 222 and the through hole TH. In some embodiments, an end of the riveting blocking portion 222 along a horizontal direction is connected to the deformation portion 224. The deformation portion 224 has a width W₂₂₄. When the riveting blocking portion 222 is not compressed, the deformation portion 224 does not abut against the magnet MG. In some embodiments, when the riveting blocking portion 222 is not compressed, the riveting blocking portion 222 does not contact the inner surface THa of the through hole TH. The horizontal direction is perpendicular to a stacking direction of the blocking silicon steel sheet 220.

Reference is made to Fig. 3C, which depicts the state after the riveting blocking portion 222 is compressed. In this embodiment, when the riveting blocking portion 222 is compressed, the riveting blocking portion 222 is flattened and straightened, driving the deformation portion 224 to deform. Specifically, the deformation portion 224, which originally has a straight profile, is bent due to the deformation of the riveting blocking portion 222 along the horizontal direction, such that the deformed deformation portion 224 pushed by the riveting blocking portion 222 abuts against the magnet MG. The magnet MG is pushed by the deformed deformation portion 224 and abuts against the inner surface THa of the through hole TH. In some embodiments, when the riveting blocking portion 222 is compressed, the deformation portion 224 contacts a surface of a side of the magnet MG close to the riveting blocking portion 222 along the horizontal direction, such that a surface of a side of the magnet MG away from the riveting blocking portion 222 abuts against the inner surface THa of a side of the through hole TH away from the riveting blocking portion 222.

In some embodiments, the width W₂₂₄ of the deformation portion 224 remains substantially unchanged, whether compressed or not.

In some embodiments, the width W₂₂₄ of the deformation portion 224 is in a range between about 0.3 millimeters (mm) to about 0.8 millimeters (mm). In some embodiments in which the width W₂₂₄ of the deformation portion 224 is greater than 0.8 millimeters during processing, when the riveting blocking portion 222 is compressed, it may be difficult to push the deformation portion 224 resulting in the deformation portion 224 failing to deform and causing the magnet MG to not be fixed as expected.

By the aforementioned structural configuration, the silicon steel sheet stacking structure 200 and the motor rotor structure RS2 have many advantages. One of the advantages is that, in addition to simplifying mold design and reducing mold costs and maintenance fees, the effect of fixing the magnet MG is not compromised.

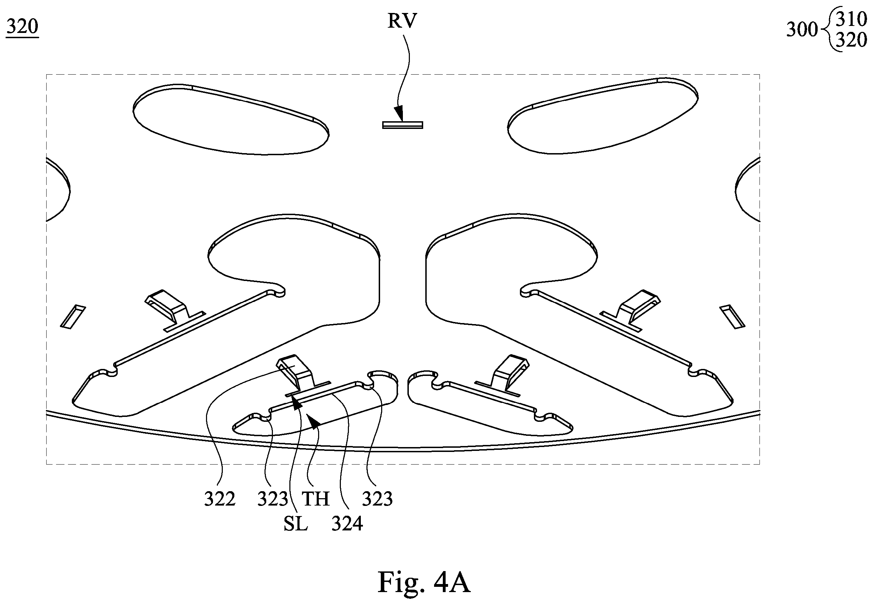

Reference is made to Fig. 4A. In this embodiment, the silicon steel sheet stacking structure 300 includes a main silicon steel lamination 310, a blocking silicon steel sheet 320, and a riveting blocking portion 322. For simplicity, the main silicon steel lamination 310 is omitted in Fig. 4A, and since the structure of the main silicon steel lamination 310 is the same as that of the aforementioned main silicon steel lamination 110 or the main silicon steel lamination 210, further description is omitted here. The blocking silicon steel sheet 320 has a through hole TH. In some embodiments, one or more through holes TH of one or more silicon steel sheets M of the main silicon steel lamination 310 are aligned with the through hole TH of the blocking silicon steel sheet 320 in a direction and define an accommodating space. For example, the one or more through holes TH of the one or more silicon steel sheets M of the main silicon steel lamination 310 are aligned with the through hole TH of the blocking silicon steel sheet 320 in a vertical direction and define the accommodating space to accommodate the magnet MG. The riveting blocking portion 322 is extended from the blocking silicon steel sheet 320 and is adjacent to the through hole TH. Specifically, the riveting blocking portion 322 is raised above a surface of the blocking silicon steel sheet 320 in the vertical direction. Both ends of the riveting blocking portion 322 along a horizontal direction are connected to the blocking silicon steel sheet 320.

Reference is made again to Fig. 4A. In this embodiment, the silicon steel sheet stacking structure 300 further includes a limiting portion 323 and a deformation portion 324. Since the structure of the limiting portion 323 is similar to that of the limiting portion 123 or the limiting portion 223, further description is omitted here. The deformation portion 324 is portion of the blocking silicon steel sheet 320. The deformation portion 324 is located between the riveting blocking portion 322 and the through hole TH. In other words, the riveting blocking portion 322 is separated from the through hole TH. In some embodiments, an end of the riveting blocking portion 322 is connected to the deformation portion 324. In this embodiment, the silicon steel sheet stacking structure 300 further has a rivet hole RV and slot SL. Since the structure of the rivet hole RV of the silicon steel sheet stacking structure 300 is similar to that of silicon steel sheet stacking structure 100 or the silicon steel sheet stacking structure 200, further description is omitted here. The slot SL runs through the blocking silicon steel sheet 320. In other words, the slot SL is separated from the through hole TH. In some embodiments, an extending direction of the slot SL is approximately perpendicular to an extending direction of the riveting blocking portion 322. In some embodiments, the through hole TH and the slot SL define the deformation portion 324 therebetween.

In some embodiments, the riveting blocking portion 322 can be formed by, for example, a stamping process. For example, the stamping process can be used to punch the blocking silicon steel sheet 320 to form the riveting blocking portion 322. However, the present disclosure is not intended to limit the method of forming the riveting blocking portion 322.

In some embodiments, the quantity of the riveting blocking portions 322, the limiting portions 323, the through holes TH, and the rivet holes RV can be plural. However, the present disclosure is not intended to limit the quantity of the riveting blocking portions 322, the limiting portions 323, the through holes TH, and the rivet holes RV.

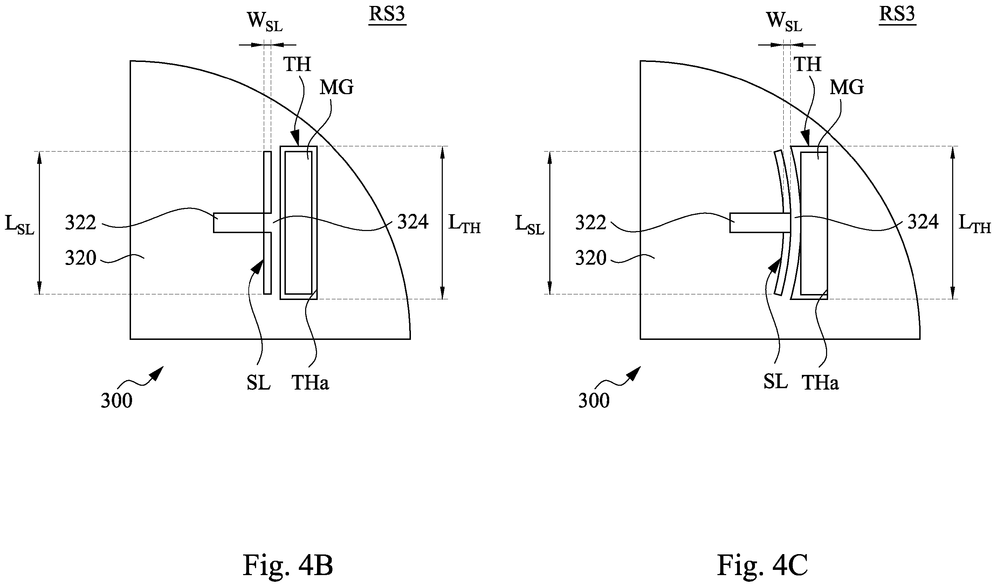

Reference is made to Fig. 4B, which depicts the state before the riveting blocking portion 322 is compressed. The silicon steel sheet stacking structure 300 and the magnet MG form the motor rotor structure RS3. For simplicity, the limiting portion 323 is omitted in Fig. 4B. In this embodiment, the slot SL has a length L_{SL} in its extending direction, and the slot SL has a width W_{SL} in a direction perpendicular to its extending direction. The through hole TH has a length L_{TH} in its extending direction. When the riveting blocking portion 322 is not compressed, the deformation portion 324 does not abut against the magnet MG. In some embodiments, when the riveting blocking portion 322 is not compressed, the deformation portion 324 does not contact the inner surface THa of the through hole TH.

Reference is made to Fig. 4C, which depicts the state after the riveting blocking portion 322 is compressed. In this embodiment, when the riveting blocking portion 322 is compressed, the riveting blocking portion 322 is flattened and straightened, driving the deformation portion 324 to deform. Specifically, the deformation portion 324, which originally has a straight profile, is bent due to the deformation of the riveting blocking portion 322 along the horizontal direction, such that the deformation portion 324 pushed by the riveting blocking portion 322 abuts against the magnet MG. The magnet MG is pushed by the deformed deformation portion 324 and abuts against the inner surface THa of the through hole TH. In some embodiments, when the riveting blocking portion 322 is compressed, the deformation portion 324 contacts a surface of a side of the magnet MG close to the riveting blocking portion 322, such that a surface of a side of the magnet MG away from the riveting blocking portion 322 abuts against the inner surface THa of a side of the through hole TH away from the riveting blocking portion 322.

In some embodiments, the width W_{SL} of the slot SL is less than about 1 millimeter (mm). In some embodiments in which the width W_{SL} of the slot SL is greater than about 1 millimeter, the material loss of the blocking silicon steel sheet 320 from forming the slot SL may slightly reduce the magnetic performance of the motor rotor structure RS3, avoiding dimensions exceeding the above conditions is preferred when designing.

In some embodiments, the length L_{SL} of the slot SL is less than the length L_{TH} of the through hole TH.

By the aforementioned structural configuration, the silicon steel sheet stacking structure 300 and the motor rotor structure RS3 have many advantages. One of the advantages is that the design of the slot SL allows the deformation portion 324 to be partially disconnected from the blocking silicon steel sheet 320, such that the deformation portion 324 is more easily pushed by the riveting blocking portion 322 and generate a deformation. In addition, the slot SL has an appropriate width W_{SL}, so the magnetic performance of the motor rotor structure RS3 is only slightly affected, and material loss during the manufacturing process is avoided. In conclusion, this achieves a balance between the effects of fixing the magnet MG and saving mold costs.

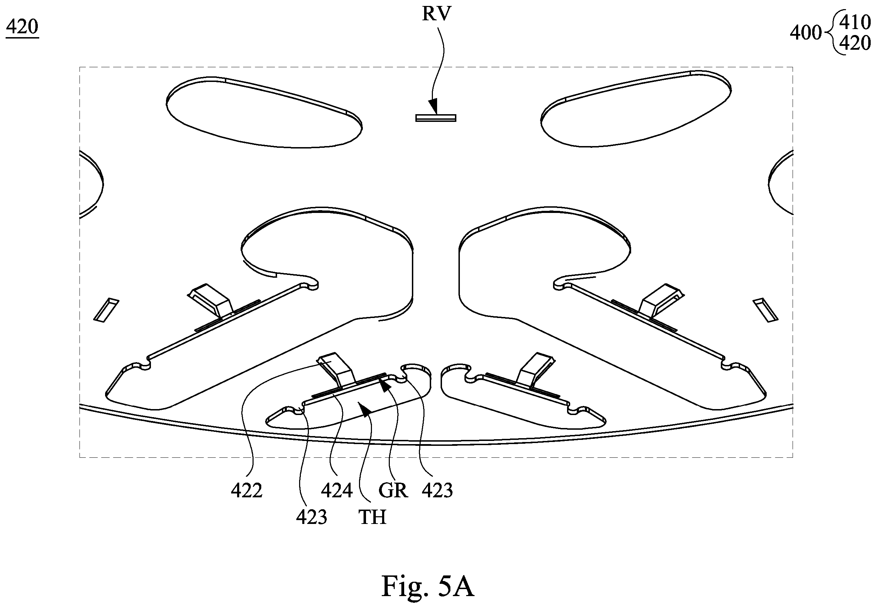

Reference is made to Fig. 5A. In this embodiment, the silicon steel sheet stacking structure 400 includes a main silicon steel lamination 410, a blocking silicon steel sheet 420, and a riveting blocking portion 422. For simplicity, the main silicon steel lamination 410 is omitted in Fig. 5A, and since the structure of the main silicon steel lamination 410 is the same as that of the aforementioned main silicon steel lamination 110, the main silicon steel lamination 210, or the main silicon steel lamination 310, further description is omitted here. The blocking silicon steel sheet 420 has a through hole TH. In some embodiments, one or more through holes TH of one or more silicon steel sheets M of the main silicon steel lamination 410 are aligned with the through hole TH of the blocking silicon steel sheet 420 in a direction and define an accommodating space. For example, the one or more through holes TH of the one or more silicon steel sheets M of the main silicon steel lamination 410 are aligned with the through hole TH of the blocking silicon steel sheet 420 in a vertical direction and define the accommodating space to accommodate the magnet MG. The riveting blocking portion 422 is extended from the blocking silicon steel sheet 420 and is adjacent to the through hole TH. Specifically, the riveting blocking portion 422 is raised above a surface of the blocking silicon steel sheet 420 in the vertical direction. Both ends of the riveting blocking portion 422 along a horizontal direction are connected to the blocking silicon steel sheet 420.

Reference is made again to Fig. 5A. In this embodiment, the silicon steel sheet stacking structure 400 further includes a limiting portion 423 and a deformation portion 424. Since the structure of the limiting portion 423 is similar to that of the limiting portion 123, the limiting portion 223, or the limiting portion 323, further description is omitted here. The deformation portion 424 is a portion of the blocking silicon steel sheet 420. The deformation portion 424 is located between the riveting blocking portion 422 and the through hole TH. In other words, the riveting blocking portion 422 is separated from the through hole TH. In some embodiments, an end of the riveting blocking portion 422 along a horizontal direction is connected to the deformation portion 424. In this embodiment, the silicon steel sheet stacking structure 400 further has a rivet hole RV and a groove GR. Since the structure of the rivet hole RV of the silicon steel sheet stacking structure 400 is similar to that of the silicon steel sheet stacking structure 100, the silicon steel sheet stacking structure 200, or the silicon steel sheet stacking structure 300, further description is omitted here. The groove GR is recessed from the surface of the blocking silicon steel sheet 420, i.e., recessed from the surface extending from the riveting blocking portion 422. The groove GR is separated from the through hole TH. In some embodiments, an extending direction of the groove GR is approximately perpendicular to an extending direction of the riveting blocking portion 422. In some embodiments, the through hole TH and the groove GR define the deformation portion 424 therebetween.

In some embodiments, the riveting blocking portion 422 can be formed by, for example, a stamping process. For example, the stamping process can be used to punch the blocking silicon steel sheet 420 to form the riveting blocking portion 422. However, the present disclosure is not intended to limit the method of forming the riveting blocking portion 422.

In some embodiments, the quantity of the riveting blocking portions 422, the limiting portions 423, the through holes TH, and the rivet holes RV can be plural. However, the present disclosure is not intended to limit the quantity of the riveting blocking portions 422, the limiting portions 423, the through holes TH, and the rivet holes RV.

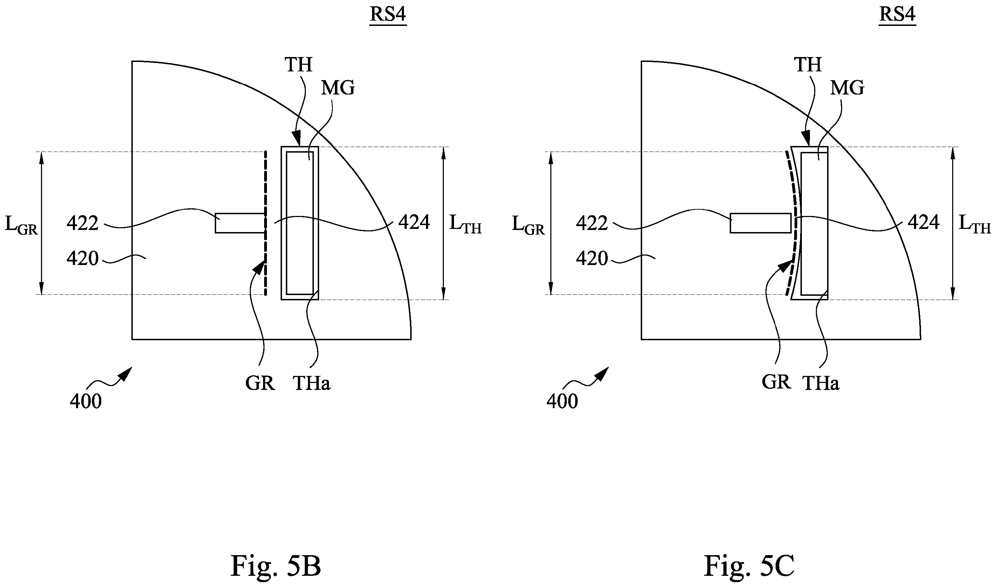

Reference is made to Fig. 5B, which depicts the state before the riveting blocking portion 422 is compressed. The silicon steel sheet stacking structure 400 and the magnet MG form the motor rotor structure RS4. For simplicity, the limiting portion 423 is omitted in Fig. 5B. In this embodiment, the groove GR has a length L_{GR} in its extending direction. The through hole TH has a length L_{TH} in its extending direction. When the riveting blocking portion 422 is not compressed, the deformation portion 424 does not abut against the magnet MG. In some embodiments, when the riveting blocking portion 422 is not compressed, the deformation portion 424 does not contact the inner surface THa of the through hole TH.

Reference is made to Fig. 5C, which depicts the state after the riveting blocking portion 422 is compressed. In this embodiment, when the riveting blocking portion 422 is compressed, the riveting blocking portion 422 is flattened and straightened, driving the deformation portion 424 to deform. Specifically, the deformation portion 424, which originally has a straight profile, is bent to due to the deformation of the riveting blocking portion 422 along the horizontal direction, such that the deformation portion 424 pushed by the riveting blocking portion 422 abuts against the magnet MG. The magnet MG is pushed by the deformed deformation portion 424 and abuts against the inner surface THa of the through hole TH. In some embodiments, when the riveting blocking portion 422 is compressed, the deformation portion 424 contacts a surface of a side of the magnet MG close to the riveting blocking portion 422, such that a surface of a side of the magnet MG away from the riveting blocking portion 422 abuts against the inner surface THa of a side of the through hole TH away from the riveting blocking portion 422.

In some embodiments, the groove GR does not run through the blocking silicon steel sheet 420. Although forming the groove GR inevitably causes material loss of the blocking silicon steel sheet 420, since a width of the groove GR is minimal, and since the groove GR is merely recessed from the surface of the blocking silicon steel sheet 420 without running through the blocking silicon steel sheet 420, the magnetic performance of the motor rotor structure RS4 is less affected compared to that of the motor rotor structure RS3.

In some embodiments, the length L_{GR} of the groove GR is less than the length L_{TH} of the through hole TH.

By the aforementioned structural configuration, the silicon steel sheet stacking structure 400 and the motor rotor structure RS4 have many advantages. One of the advantages is that the design of the groove GR allows the connecting intensity between the deformation portion 424 and the blocking silicon steel sheet 420 to be weakened, such that the deformation portion 424 is more easily pushed by the riveting blocking portion 422 and generate a deformation. In addition, the groove GR has an appropriate length L_{GR}, so the magnetic performance of the motor rotor structure RS4 is less affected, and material loss during the manufacturing process is avoided. In conclusion, this achieves a balance between the effects of fixing the magnet MG and saving mold costs.

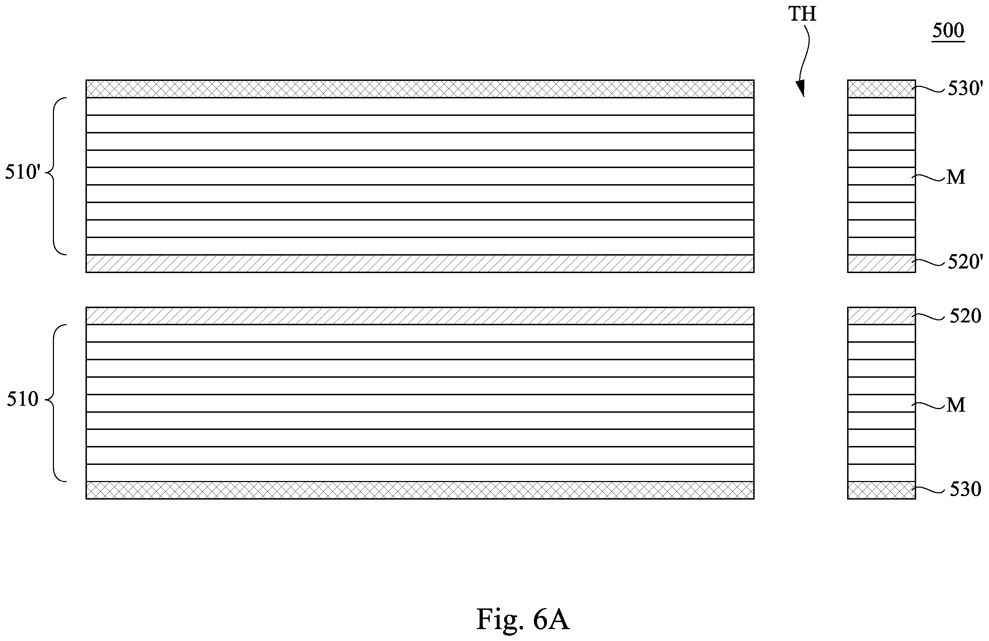

Reference is made to Fig. 6A. In this embodiment, the silicon steel sheet stacking structure 500 includes a main silicon steel lamination 510, a blocking silicon steel sheet 520, a measuring sheet 530, a main silicon steel lamination 510', a blocking silicon steel sheet 520', and a measuring sheet 530', and the silicon steel sheet stacking structure 500 has a through hole TH. The measuring sheet 530, the main silicon steel lamination 510, the blocking silicon steel sheet 520, the blocking silicon steel sheet 520', the main silicon steel lamination 510', and the measuring sheet 530' are arranged sequentially from bottom to top. Each of the main silicon steel lamination 510 and the main silicon steel lamination 510' includes one or more silicon steel sheets M. The combination of the main silicon steel lamination 510, the blocking silicon steel sheet 520, and the measuring sheet 530 can be considered as one module, and the combination of the main silicon steel lamination 510', the blocking silicon steel sheet 520', and the measuring sheet 530' can be considered as another module. The structural configurations of these two modules are exactly the same, with the only difference being that the two modules are inverted relative to each other. The silicon steel sheet stacking structure 500 has many advantages. One of the advantages is that, due to the identical structural configuration of the two modules, the manufacturer only needs to produce one part number during the production process. Therefore, the part number does not need to be distinguished, thereby simplifying the production and reducing costs.

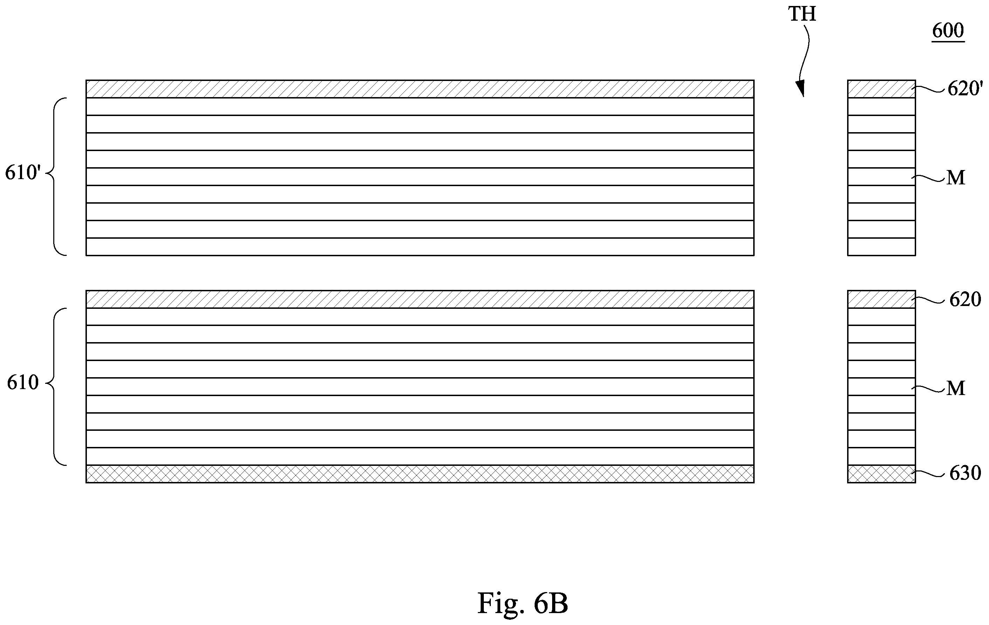

Reference is made to Fig. 6B. In this embodiment, the silicon steel sheet stacking structure 600 includes a main silicon steel lamination 610, a blocking silicon steel sheet 620, a measuring sheet 630, a main silicon steel lamination 610', and a blocking silicon steel sheet 620', and the silicon steel sheet stacking structure 600 has a through hole TH. The measuring sheet 630, the main silicon steel lamination 610, the blocking silicon steel sheet 620, the main silicon steel lamination 610', and the blocking silicon steel sheet 620' are arranged sequentially from bottom to top. Each of the main silicon steel lamination 610 and the main silicon steel lamination 610' includes one or more silicon steel sheets M. The combination of the main silicon steel lamination 610, the blocking silicon steel sheet 620, and the measuring sheet 630 can be considered as one module, and the combination of the main silicon steel lamination 610' and the blocking silicon steel sheet 620' can be considered as another module. When the upstream supplier provides the material, the other module can include an additional measuring sheet (not depicted). At this stage, the structural configurations of these two modules are exactly the same. After the manufacturer removes the extra measuring sheet, the two modules can be stacked together to form the silicon steel sheet stacking structure 600. The silicon steel sheet stacking structure 600 has many advantages. One of the advantages is that, although the manufacturer needs to perform an additional action of removing the measuring sheet when receiving the material, no further flipping of the modules is required during the manufacturing of the silicon steel sheet stacking structure 600. This action sacrifices a small amount of costa but simplifies the process and shortens the production duration.

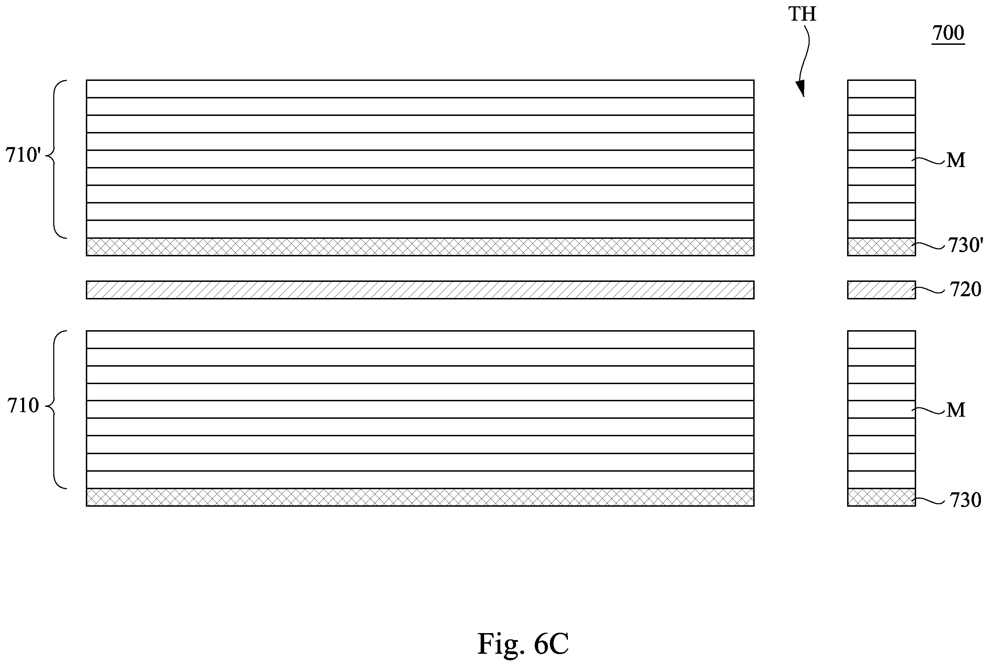

Reference is made to Fig. 6C. In this embodiment, the silicon steel sheet stacking structure 700 includes a main silicon steel lamination 710, a blocking silicon steel sheet 720, a measuring sheet 730, a main silicon steel lamination 710', and a measuring sheet 730', and the silicon steel sheet stacking structure 700 has a through hole TH. The measuring sheet 730, the main silicon steel lamination 710, the blocking silicon steel sheet 720, the measuring sheet 730', and the main silicon steel lamination 710' are arranged sequentially from bottom to top. Each of the main silicon steel lamination 710 and the main silicon steel lamination 710' includes one or more silicon steel sheets M. The combination of the main silicon steel lamination 710 and the measuring sheet 730 can be considered as one module, and the combination of the main silicon steel lamination 710' and the measuring sheet 730' can be considered as another module. The structural configurations of these two modules are exactly the same. The silicon steel sheet stacking structure 700 has many advantages. One of the advantages is that, although the upstream supplier provides two different part numbers (i.e., the combination of the measuring sheet 730 (the measuring sheet 730') and the main silicon steel lamination 710 (the main silicon steel lamination 710') form one part number, and the blocking silicon steel sheet 720 forms another part number), no further removal of parts or flipping of the modules is required during the manufacturing of the silicon steel sheet stacking structure 700. In addition, the mold designs for each of part numbers can be simplified, thereby making the production easier and better controlling costs.

From the detailed description of the specific embodiments above, it can be clearly seen that in the silicon steel sheet stacking structure and the motor rotor structure of the present disclosure, since the riveting blocking portion is extended from the blocking silicon steel sheet and raised above the surface of the blocking silicon steel sheet, when the riveting blocking portion is compressed under pressure and generates a deformation, the riveting blocking portion can straighten and enter the through hole, thereby fixing the magnet located in the through hole. In the silicon steel sheet stacking structure and the motor rotor structure of the present disclosure, since the riveting blocking portion can enter the through hole and fix the magnet after being compressed, it solves the problem of the center of gravity of the magnet being unbalanced in the through hole, and prevents the magnet from falling off or cracking during subsequent motor operation, while also optimizing vibration and noise performance. Overall, the silicon steel sheet stacking structure and the motor rotor structure of the present disclosure optimize the method of fixing the magnet, ensuring that the magnet can still be securely fastened within the through hole.

## Claims

1. A silicon steel sheet stacking structure (100), **characterized by** comprising:
a main silicon steel lamination (110) comprising a plurality of silicon steel sheets (M) stacking in a first direction, wherein each of the silicon steel sheets (M) has at least one through hole (TH);
a blocking silicon steel sheet (120) disposed on the main silicon steel lamination (110), the blocking silicon steel sheet (120) having at least one through hole (TH), wherein a plurality of the through holes (TH) of the main silicon steel lamination (110) are aligned with the at least one through hole (TH) of the blocking silicon steel sheet (120) in the first direction and define at least one accommodating space; and
a riveting blocking portion (122) extended from the blocking silicon steel sheet (120) and raised above a surface of the blocking silicon steel sheet (120) along the first direction,
wherein the riveting blocking portion (122) is configured to be compressed and generate a deformation, such that the riveting blocking portion (122) pushes at least one magnet (MG) located in the at least one accommodating space to abut the at least one magnet (MG) against an inner surface (THa) of the at least one through hole (TH).

2. The silicon steel sheet stacking structure as claimed in claim 1, **characterized in that** each of the silicon steel sheets (M) and the blocking silicon steel sheet (120) further comprise a rivet hole (RV) respectively, and wherein a plurality of the rivet holes (RV) of the silicon steel sheets (M) are aligned with the rivet hole (RV) of the blocking silicon steel sheet (120) in the first direction.

3. The silicon steel sheet stacking structure as claimed in claim 1, **characterized in that** the blocking silicon steel sheet (220) further comprises a deformation portion (224) located between the riveting blocking portion (222) and the at least one through hole (TH).

4. The silicon steel sheet stacking structure as claimed in claim 3, **characterized in that** an end of the riveting blocking portion (222) in a second direction is connected to the deformation portion (224), and wherein the first direction is perpendicular to the second direction.

5. The silicon steel sheet stacking structure as claimed in claim 1, **characterized in that** the blocking silicon steel sheet (320) further comprises a slot (SL), wherein the at least one through hole (TH) and the slot (SL) define a deformation portion (324) therebetween, and wherein the slot (SL) runs through the blocking silicon steel sheet (320) along the first direction.

6. The silicon steel sheet stacking structure as claimed in claim 5, **characterized in that** the slot (SL) separates the at least one through hole (TH) from the riveting blocking portion (322).

7. The silicon steel sheet stacking structure as claimed in claim 5, **characterized in that** an end of the riveting blocking portion (322) in a second direction is connected to the deformation portion (324), and wherein the first direction is perpendicular to the second direction.

8. The silicon steel sheet stacking structure as claimed in claim 7, **characterized in that** a length (L_{SL}) of the slot (SL) along the second direction is less than a length (L_{TH}) of the at least one through hole (TH) along the second direction.

9. The silicon steel sheet stacking structure as claimed in claim 1, **characterized in that** the blocking silicon steel sheet (420) further comprises a groove (GR) recessed from a surface extending from the riveting blocking portion (422), and wherein the at least one through hole (TH) and the groove (GR) define a deformation portion (424) therebetween.

10. The silicon steel sheet stacking structure as claimed in claim 9, **characterized in that** the groove (GR) separates the at least one through hole (TH) from the riveting blocking portion (422).

11. The silicon steel sheet stacking structure as claimed in claim 9, **characterized in that** an end of the riveting blocking portion (422) in a second direction is connected to the deformation portion (424), and wherein the first direction is perpendicular to the second direction.

12. The silicon steel sheet stacking structure as claimed in claim 1, **characterized by** further comprising another main silicon steel lamination (510'), another blocking silicon steel sheet (520'), a first measuring sheet (530), and a second measuring sheet (530'), wherein the first measuring sheet (530), the main silicon steel lamination (510), the blocking silicon steel sheet (520), the another blocking silicon steel sheet (520'), the another main silicon steel lamination (510'), and the second measuring sheet (530') are disposed sequentially along the first direction.

13. The silicon steel sheet stacking structure as claimed in claim 1, **characterized by** further comprising another main silicon steel lamination (610'), another blocking silicon steel sheet (620'), and a measuring sheet (630), wherein the measuring sheet (630), the main silicon steel lamination (610), the blocking silicon steel sheet (620), the another main silicon steel lamination (610'), and the another blocking silicon steel sheet (620') are disposed sequentially along the first direction.

14. The silicon steel sheet stacking structure as claimed in claim 1, **characterized by** further comprising another main silicon steel lamination (710'), a first measuring sheet (730), and a second measuring sheet (730'), wherein the first measuring sheet (730), the main silicon steel lamination (710), the blocking silicon steel sheet (720), the second measuring sheet (730'), and the another main silicon steel lamination (710') are disposed sequentially along the first direction.

15. A motor rotor structure (RS1) including the silicon steel sheet stacking structure as claimed in claim 1, **characterized in that** the at least one magnet (MG) located in the at least one accommodating space and abutting against an inner surface (THa) of the at least one through hole (TH), and the at least one magnet (MG) passing through the main silicon steel lamination (110) and the blocking silicon steel sheet (120).

## Amended claims

### Amended claims in accordance with Rule 137(2) EPC.

1. A silicon steel sheet stacking structure (100), comprising:
a main silicon steel lamination (110) comprising a plurality of silicon steel sheets (M) stacking in a first direction, wherein each of the silicon steel sheets (M) has at least one through hole (TH);
a blocking silicon steel sheet (120) disposed on the main silicon steel lamination (110), the blocking silicon steel sheet (120) having at least one through hole (TH), wherein a plurality of the through holes (TH) of the main silicon steel lamination (110) are aligned with the at least one through hole (TH) of the blocking silicon steel sheet (120) in the first direction and define at least one accommodating space; and
a riveting blocking portion (122) extended from the blocking silicon steel sheet (120) and raised above a surface of the blocking silicon steel sheet (120) along the first direction, wherein the riveting blocking portion (122) does not enter a range of the at least one through hole (TH) when the riveting blocking portion (122) is not compressed,
wherein the riveting blocking portion (122) is configured to be compressed and generate a deformation, such that the riveting blocking portion (122) pushes at least one magnet (MG) located in the at least one accommodating space to abut the at least one magnet (MG) against an inner surface (THa) of the at least one through hole (TH).

2. The silicon steel sheet stacking structure as claimed in claim 1, **characterized in that** each of the silicon steel sheets (M) and the blocking silicon steel sheet (120) further comprise a rivet hole (RV) respectively, and wherein a plurality of the rivet holes (RV) of the silicon steel sheets (M) are aligned with the rivet hole (RV) of the blocking silicon steel sheet (120) in the first direction.

3. The silicon steel sheet stacking structure as claimed in claim 1, **characterized in that** the blocking silicon steel sheet (220) further comprises a deformation portion (224) located between the riveting blocking portion (222) and the at least one through hole (TH).

4. The silicon steel sheet stacking structure as claimed in claim 3, **characterized in that** an end of the riveting blocking portion (222) in a second direction is connected to the deformation portion (224), and wherein the first direction is perpendicular to the second direction.

5. The silicon steel sheet stacking structure as claimed in claim 1, **characterized in that** the blocking silicon steel sheet (320) further comprises a slot (SL), wherein the at least one through hole (TH) and the slot (SL) define a deformation portion (324) therebetween, and wherein the slot (SL) runs through the blocking silicon steel sheet (320) along the first direction.

6. The silicon steel sheet stacking structure as claimed in claim 5, **characterized in that** the slot (SL) separates the at least one through hole (TH) from the riveting blocking portion (322).

7. The silicon steel sheet stacking structure as claimed in claim 5, **characterized in that** an end of the riveting blocking portion (322) in a second direction is connected to the deformation portion (324), and wherein the first direction is perpendicular to the second direction.

8. The silicon steel sheet stacking structure as claimed in claim 7, **characterized in that** a length (L_{SL}) of the slot (SL) along the second direction is less than a length (L_{TH}) of the at least one through hole (TH) along the second direction.

9. The silicon steel sheet stacking structure as claimed in claim 1, **characterized in that** the blocking silicon steel sheet (420) further comprises a groove (GR) recessed from a surface extending from the riveting blocking portion (422), and wherein the at least one through hole (TH) and the groove (GR) define a deformation portion (424) therebetween.

10. The silicon steel sheet stacking structure as claimed in claim 9, **characterized in that** the groove (GR) separates the at least one through hole (TH) from the riveting blocking portion (422).

11. The silicon steel sheet stacking structure as claimed in claim 9, **characterized in that** an end of the riveting blocking portion (422) in a second direction is connected to the deformation portion (424), and wherein the first direction is perpendicular to the second direction.

12. The silicon steel sheet stacking structure as claimed in claim 1, **characterized by** further comprising another main silicon steel lamination (510'), another blocking silicon steel sheet (520'), a first measuring sheet (530), and a second measuring sheet (530'), wherein the first measuring sheet (530), the main silicon steel lamination (510), the blocking silicon steel sheet (520), the another blocking silicon steel sheet (520'), the another main silicon steel lamination (510'), and the second measuring sheet (530') are disposed sequentially along the first direction.

13. The silicon steel sheet stacking structure as claimed in claim 1, **characterized by** further comprising another main silicon steel lamination (610'), another blocking silicon steel sheet (620'), and a measuring sheet (630), wherein the measuring sheet (630), the main silicon steel lamination (610), the blocking silicon steel sheet (620), the another main silicon steel lamination (610'), and the another blocking silicon steel sheet (620') are disposed sequentially along the first direction.

14. The silicon steel sheet stacking structure as claimed in claim 1, **characterized by** further comprising another main silicon steel lamination (710'), a first measuring sheet (730), and a second measuring sheet (730'), wherein the first measuring sheet (730), the main silicon steel lamination (710), the blocking silicon steel sheet (720), the second measuring sheet (730'), and the another main silicon steel lamination (710') are disposed sequentially along the first direction.

15. A motor rotor structure (RS1) including the silicon steel sheet stacking structure as claimed in claim 1, the at least one magnet (MG) being located in the at least one accommodating space, and the at least one magnet (MG) passing through the main silicon steel lamination (110) and the blocking silicon steel sheet (120), wherein the riveting blocking portion (122) is compressed and deformed, enters the range of the at least one through hole (TH) and abuts the at least one magnet (MG) against the inner surface (THa) of the at least one through hole (TH).
